Europäisches Patentamt

European Patent Office

Office européen des brevets

(11) Publication number: **0 254 434**
**A2**

## EUROPEAN PATENT APPLICATION

(21) Application number: **87305712.9**

(22) Date of filing: **26.06.87**

(51) Int. Cl.⁴: **A01G 9/10**

(30) Priority: **17.07.86 US 887118**

(43) Date of publication of application:
**27.01.88 Bulletin 88/04**

(84) Designated Contracting States:
**DE IT NL**

(71) Applicant: **SMITHERS-OASIS CO**
**919 Marvin Avenue**
**Kent Ohio 44240(US)**

(72) Inventor: **Boodley, James W.**
**4542 Sunnybrook Road**
**Kent Ohio 44240(US)**
Inventor: **Kane, Michael D.**
**344 Stevenson Avenue**
**Akron Ohio 44312(US)**

(74) Representative: **Allden, Thomas Stanley et al**
**A.A. THORNTON & CO. Northumberland**
**House 303-306 High Holborn**
**London WC1V 7LE(GB)**

(54) **Grower unit for the asexual vegetative propagation of plant cuttings.**

(57) A grower unit (10) for the propagation of plants comprises tray means (11) having a first support surface (13); a plurality of cavities (14) carried by the support surface in at least one row (15a), each cavity having first and second pairs of side walls (23,24 and 25,26), a mouth (28) and a bottom (29); and dam means (30) formed in the support surface separating adjacent cavities in the row; and, artificial growing media (12) adapted to fit the plurality of cavities and engageable with the dam means.

FIG. I

## GROWER UNIT FOR THE ASEXUAL VEGETATIVE PROPAGATION OF PLANT CUTTINGS

TECHNICAL FIELD

The present invention is directed toward a grower unit for the propagation of plant cuttings during which stage the inducement of root activity is of primary concern. Asexual vegetative propagation of plants is a well known procedure and is important in the greenhouse industry where several hundred million plants such as poinsettias, geraniums and chrysanthemums for instance, are started each year. The majority of greenhouse flower crops are grown in various containers such as pots or flats or on benches. All employ a growing media into which the cutting is inserted, the process or step being referred to as sticking. Once the cutting develops a root structure, it can be transplanted into a larger container for continued growth and usually, eventual sale.

While the cutting could be inserted directly into the final container, e.g., flower pot, doing so ties up a much larger area in the greenhouse than the cutting and developing young plant requires. A saving of space is accomplished by rooting cuttings at a high density within a tray or flat, which in turn may be placed on a bench for convenience.

BACKGROUND OF THE INVENTION

The use of trays, or flats in the grower industry to hold plants, cuttings or the like is well known. In general, a series of cuttings can be started in a suitable growing media within a tray or flat, which in turn is generally set on a bench or benches. Typically, water and bottom heat are supplied in order to stimulate and promote root growth. Eventually, the cuttings are ready for potting and can be moved away from the propagation area, after which the tray can be prepared for reuse or, in many instances, disposed.

With respect to the art, most work in this field has been directed to construction of benches, or troughs designed to hold potted plants, flats, or trays. One early patent, U.S. Pat. No. 2,015,924 discloses a greenhouse bench comprising a composite material, such as concrete, containing drainage holes, and heated by a plurality of heating pipes. The construction of the bench enables plants to be grown directly thereon, somewhat as a permanent tray.

Most of the other relevant art has been directed toward improving growing systems for plants. U.S. Pat. No. 3,608,238 teaches a method of providing a plant with a culture medium, wherein the plant is embedded in a polyurethane foamable matrix which forms a polyurethane reaction mixture about the roots of the plant.

U.S. Pat. No. 4,118,891 discloses a conduit system for feeding water and nutrients to plants. The conduits comprise a thin, pliable, collapsible plastic foil, and the plants, whose roots are in a block or mass of porous material, are placed therein.

U.S. Pat. No. 4,488,377 discloses a method of cultivating plants without soil, wherein an oxygenated nutrient solution is supplied to the root system of the plants within a closed, filtered system.

The flats or trays that are typically employed generally accomplish two major purposes. First, they provide support for the growing media and the cutting therein. Second, they provide an adequate means for starting a number of cuttings simultaneously. In addition, utilization of flats or trays generally affords the grower increased efficiency and simplicity of transport and care of the cuttings. In comparison, the flats or trays are similar to pots in that they directly support the cutting within the growing media, whereas benches or tables are generally used to support the flats, trays, or pots.

Plant propagation can be conducted in various growing media including mixtures of mineral soils, peat moss, vermiculite, perlite and composts and synthetic rigid substrates such as rockwool and foam. While these vary as to composition as well as favourable properties, it is important that each be able to provide three functions which are plant support, storage and drainage of water and the provision of oxygen to the root system.

Obviously, the composition of media such as soils and mixtures thereof should be controlled to provide the aforesaid functions but variations will occur from batch to batch and even from one pot to the next. The use of rigid foam rooting substrates therefore provides a useful property and that is uniformity. Uniformity in the media tends to enable all cuttings to proceed at the same rate of development without concern for differences in water absorption or drainage rates, for instance. The result is a higher number of usable cuttings which are substantially equal in development at any given time thereby lessening the need to sort out slowly developing plants and to devote extra time and attention thereto.

One rigid foam plastic that has found commercial acceptance among growers is the product known as OASIS ROOTCUBES provided by our common Assignee, Smithers-Oasis Company. ROOTCUBES and OASIS are registered trademarks of Smithers-Oasis Company for a foam plastic growing media and an open celled phenol formaldehyde foam, respectively. The foam product is provided in strips or rectangular modules each being pre-cast or scored into separable cubes to facilitate transplanting after a cutting has rooted therein. The strips or modules can be placed directly on the bench or in flats which are, in turn, located on the bench.

Notwithstanding the known use of trays and benches for the propagation and growth of seedlings and plant cuttings, the art has not provided heretofore a specifically configured grower unit adapted to promote the development of roots.

## DISCLOSURE OF THE INVENTION

It is therefore an object of the present invention to provide a grower unit for the propagation of plants in multiple units and maximized space use on greenhouse benches.

It is another object of the present invention to provide a synthetic growing media having a specific configuration adapted for use with the grower unit described hereinabove as well as separately therefrom.

It is another object of the present invention to provide a grower unit that allows for visual inspection of the rooting process.

It is yet another object of the present invention to provide a grower unit that allows the grower to select specific spacing for individual crops and within the tray.

In general, the grower unit for the propagation of plants according to the present invention comprises tray means and artificial growing means. The tray provides a first support surface; a plurality of cavities carried by the support surface in at least one row; each cavity having first and second pairs of side walls, a mouth and a bottom and, dam means formed in the support surface separating adjacent cavities in the row. The artificial growing media is adapted to fit the plurality of cavities and is engageable with the dam means.

The tray itself is novel and can be employed as an invention separate from the foam. The present invention also provides a growing media strip which comprises an upper surface; a pair of opposed side walls extending downwardly from the upper surface; a continuous undulating lower surface passing between the side walls and forming a plurality of tapered sections and bridge means connecting the sections together.

The grower unit offers the advantage of selective spacing for specific crops. The uniquely shaped cavities of the unit can be provided in a number of rows and the exact number to be used can be determined by the growers needs. The individuality of the cavities permits the propagation of cuttings in a variety of configurations, depending on ultimate plant size of the desired cutting. These configurations and the advantage thereof will be discussed in greater detail hereinbelow.

The grower unit also enables the grower to inspect rooting progress of the crop as a unit, or with the added benefit of inspection and grading of individual cuttings of the crop for uniformity and progress. In addition, the configuration of the cavities is such that once rooted, the cuttings may be removed and densified to a smaller space volume, a factor which inevitably reduces shipping costs.

Moreover, the light weight design and size of the grower unit offers advantages in transporting and care of the crop. Additional advantages of the present invention over the prior art will be more fully described hereinbelow.

## BRIEF DESCRIPTION OF THE DRAWINGS

Fig. 1 is a perspective view of the grower unit of the present invention;

Fig. 2 is an enlarged exploded perspective of a corner of the grower unit which depicts the tray and the media;

Fig. 3 is a cross-section, taken substantially along lines 3-3 of Fig. 1;

Fig. 4 is a cross-section, taken substantially along lines 4-4 of Fig. 1;

Fig. 5 is a perspective view of a section of the artificial growing media;

Fig. 6 is a cross-section similar to Fig. 4 depicting initial placement of the growing media in the tray;

Fig. 7 is a cross-section similar to Fig. 6 but depicting final placement of the growing media; and

Fig. 8 is a top plan view of the growing media and formation of twin strips thereof.

## PREFERRED EMBODIMENT FOR CARRYING OUT THE INVENTION

The grower unit of the present invention is referred to generally by the numeral 10. The grower unit 10 includes a tray 11 and artificial growing media 12. The tray is preferably constructed of a rigid flexible thermoplastic such as polystyrene which can be molded or vacuum formed. The growing media is preferably the ROOTCUBES brand of growing media, but practice of the present invention is certainly not limited thereto nor to phenol-formaldehyde or urea-formaldehyde foams.

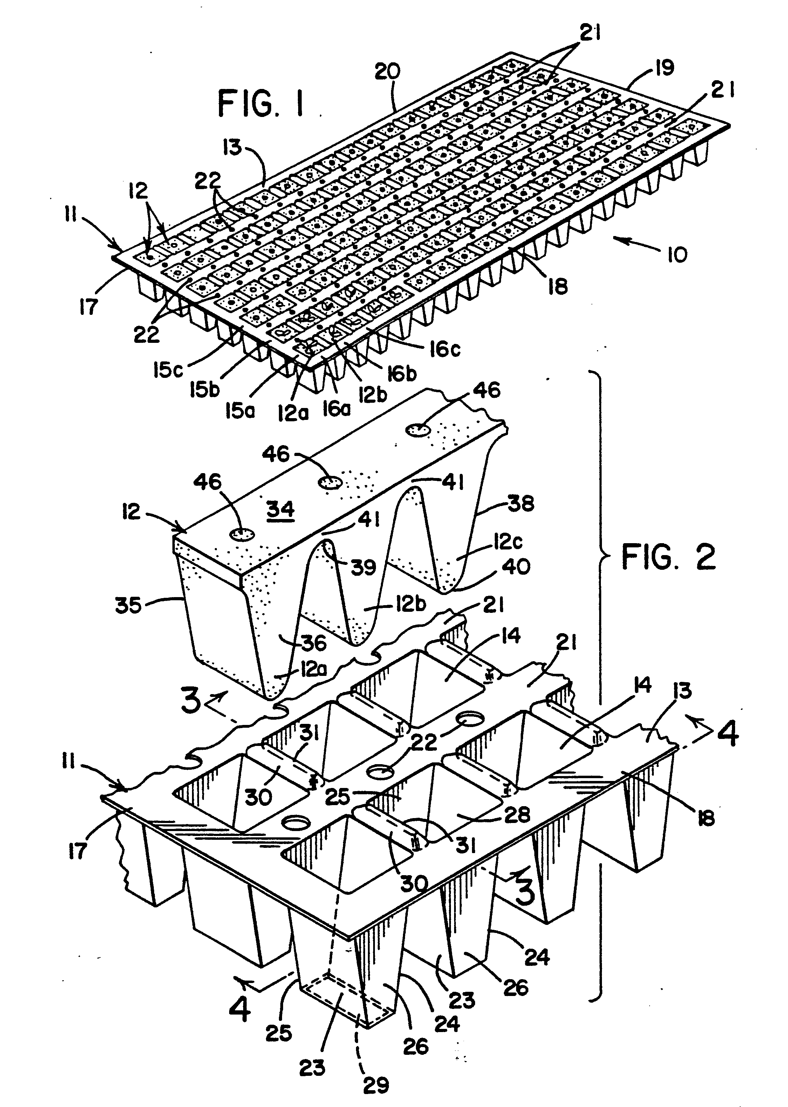

With particular reference to Figs. 2-4, the tray 11 comprises an upper or first support surface 13 which is generally planar, and a plurality of cavities 14. The cavities 14 are preferably arranged in rows 15a, b, c ... and columns 16a, b, c ... it being understood that the unit 10 is not necessarily limited to a particular number of rows or columns so long as at least one row is provided. The outermost rows and columns are bounded by peripheral edges 17, 18, 19 and 20. Separating the rows, the supporting surface provides a plurality of dividers 21 in which are evenly spaced holes 22 for air movement. The holes as shown can be round and about one-quarter inch (6.35 mm) in diameter or they may be elongated slots, depending upon ease of manufacture. Movement of air is helpful to avoid the growth of any plant diseases that could develop in otherwise stagnant air and damage the roots.

Each separate cavity is formed by a first pair of opposed side walls 23 and 24 and a second pair of opposed side walls 25 and 26. In the preferred form, the side walls 23 and 24 are tapered downwardly and inwardly so that a wedge or V-shaped cavity is formed. While the side walls appear parallel, this is not mandatory, but rather an expedient as will be discussed hereinbelow. Each cavity 14 has a mouth 28 which is coplanar with the support surface 13 i.e., dividers 22. The bottom 29 of each cavity 14 is preferably open as shown and is at least partially open.

Separating the cavities 14 between columns 16a, 16b and the like are individual dams 30. The dam 30 is generally an upward extension of the side walls 24 and 23 from two adjacent cavities and terminates in a ridge 31 which is above the supporting surface 13. The purpose of the dam shall be set forth hereinbelow.

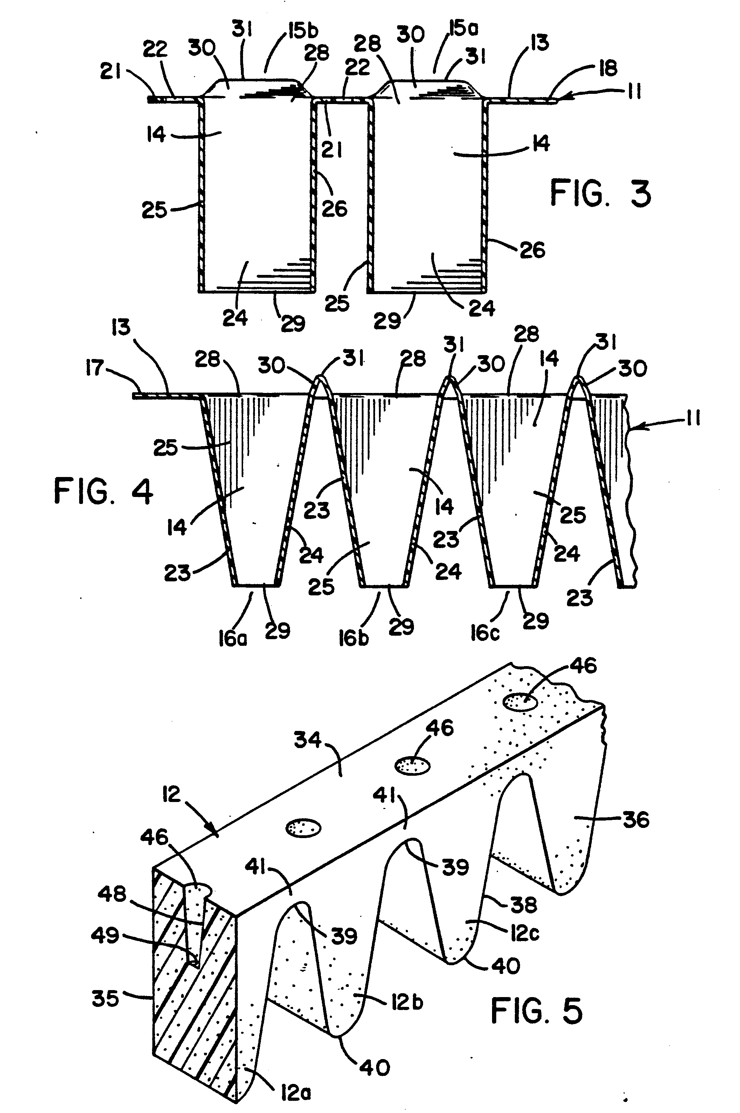

With reference to Fig. 5, the growing media 12 comprises a strip of rigid foam or other suitable material which provides a plurality of sections 12a, 12b, 12c .... The configuration of media 12 provides a flat, elongate upper surface 34, opposed side walls 35 and 36 and a continuous undulating bottom wall 38. The undulating bottom follows a zig-zag pattern providing upper concave portions 39 and lower convex portions 40. In essence, each section 12a, 12b, 12c is generally V-shaped and is thereby adapted to fit an individual cavity 14.

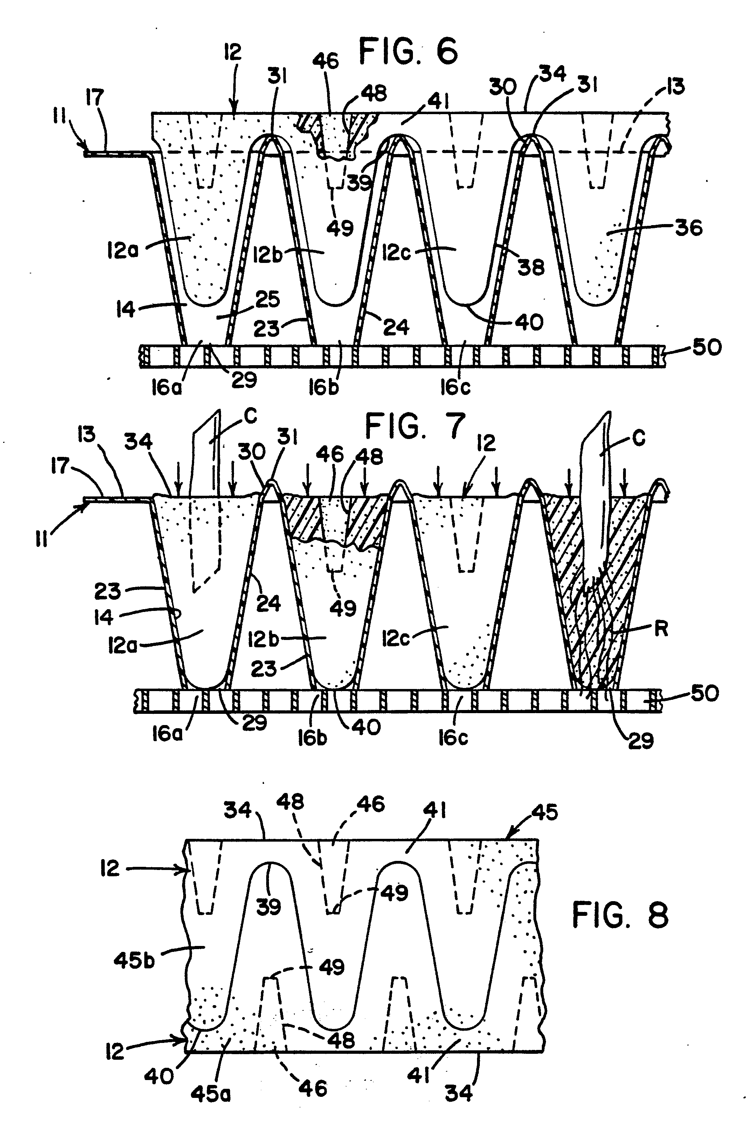

Toward the top of the strip 12, a bridge 41 is formed above the concave portion 39, each bridge serving to hold adjacent sections 12a, 12b and the like together. To use the strip 12, it is placed into a row e.g. 15a, as depicted in Fig. 6 to a position where the bridges 41 contact dams 30. Next, by applying downward pressure, as depicted by the arrows in Fig. 7, the bridges fracture over the dams and the sections 12a and the like essentially fill the cavities 14. It will be noted that when the strip 12 is correctly placed, the upper surface 34 is essentially coplanar with the support surface 13.

One improvement derived from the strip configuration is presented in Fig. 8. A generally rectangular foam strip 45 is positioned on one side and is impressed with a blade having a zig-zag configuration. This results in the formation of two symmetrical halves 45a and 45b each of which comprises a strip 12. The zig-zag configuration also provides a symmetry to each of the individual sections 12a, 12b and the like. Where formerly, the entire strip section 45 may have been employed to start a given number of plants, twice the number is now obtained. Moreover, except at the ends where a fractional section is formed, the configuration of the strip 12 provides minimal waste.

At the time of manufacture, each of the sections 12a, 12b can be pre-punched with a hole 46 which has a tapered side wall 48 and an apex 49. While not to be bound by dimensions, the hole is approximately 0.8 inch deep (20 mm) and is 0.25 to 0.375 inch in diameter (6.3 to 8.7 mm) at the mouth, wide enough to accomodate a plant cutting without damage to the top of the strip 12. Similarly, the strip is approximately 2 inches high (5 cm) and 1 inch wide (2.5 cm) and is about 1 inch per side at the top when placed down into a cavity 14.

In order to initiate propagation, a cutting C from the plant, e.g., poinsettia, geranium or the like, is inserted into the hole, e.g., section 12a, etc. Fig. 7. Where the media is relatively soft and frangible, as is the phenol formaldehyde foam product discussed hereinabove, the cutting easily forms an enlarged hole and the foam immediately encompasses around the cutting forming a close fit.

Once the cutting has been inserted, it is important that the cutting not be pulled or otherwise repositioned as this would break the contact between the cutting base and the media. As the roots R, begin to form they eventually grow down through the media to extend out the bottom 29 of a cavity 14 where they are visible upon inspection from underneath the tray. The advantage of a foam product as the media should be apparent over a soil mixture when it is desired to inspect root development.

For use of the grower unit 10, placement directly on any suitable frame, generally 50, is quite satisfactory. Such frames, normally found in greenhouses, comprise a table having an open grate for a top and legs. In the alternative, the unit could be temporarily supported on sawhorses, piled bricks or blocks or the like, the purpose of which is to provide a more comfortable working height, increased exposure to the light and adequate drainage of excess water.

Having thus described in detail the component elements of the grower unit 10, a brief description regarding the use thereof follows. First, the growing media 12 should be prepared. Should other growing media be selected, the grower may wish to employ sterilization and/or fertilization treatments as well. Inasmuch as the most preferred mode of the invention requires the use of a foam growing media, such as the ROOTCUBES product discussed hereinabove, the explanation shall proceed with those as exemplary.

The foam strips are next placed within the tray 11, pushed down into the cavities 14 and wetted thoroughly, after which the properly prepared plant cuttings are inserted into the foam. Thereafter, the grower is essentially finished until it is necessary to water the media and cuttings. This, of course, can be regulated to proceed automatically.

Normally, the plant cuttings will fully develop their roots over a period of about 14 to 28 days, somewhat depending upon the variety of plant, with 21 days being an average. The grower may wish to check progress of the rooting on a periodic basis, such as weekly, which is readily facilitated by removing a section 12a, etc. or by lifting the tray and checking the underside.

When it has been determined that the cuttings have sufficiently rooted, the foam strips can be removed, and separately potted into a suitable vessel which may be one ready for eventual sale to the customer or one that is intermediate to the final use and destination of the plant. The potting, per se, is well known to those skilled in the art and does not constitute an element for the practice of the present invention.

An advantage of the grower tray is in its design which provides for multiple crop use and maximized space use on greenhouse benches. A typical tray size of 12 x 24 inches (30 x 60 cm) contains 126 cavities, 7 rows x 18. This is equivalent to 63 plants per square foot of propagation area. As an example, this configuration is useful for chrysanthemums, New Guinea impatiens, selected foliage crops, woody ornamentals and other, related crops.

By removing every other row of cavities, to leave a 4 row x 18 cavity configuration at a spacing of 1.25 x 3.33 inches (3.1 x 8.2 cm) would provide 72 cavities or 36 plants per square foot of area, a spacing suitable for geraniums and the like. By removing the second, third, fifth and sixth rows, leaving the first, fourth and seventh, a spacing of 1.25 x 5 inches is provided (3.1 x 1.25 cm). This is equivalent to 27 plants per square foot and is useful for poinsettias.

Another alternative for poinsettias is to stick cuttings in every other unit in a row. This provides 27 plants per unit or 13.5 plants per square foot and constitutes an increase of 3.9 cuttings per square foot or 41% greater use of space over the presently recommended 9.5 cuttings per square foot.

Lastly, the time to full propagation and the labor of the grower is significantly reduced by employing the grower unit 10, all of which combine to provide more plants with lower costs and higher profits.

In the instance where the grower desires to provide a different growing media, the tray 11 can be employed without the uniquely configured growing media discussed herein. Thus, individual wedges of growing media e.g., compressed peat can be preformed and inserted into the cavities 14 desired. Or a loose material such as a soil composite can be employed to fill the cavities. In this instance, the bottom of the tray may be only partially open or it may be occluded with a screen, cheese cloth or the like. While not as desirable as the preferred invention set forth herein, nevertheless the tray can be employed in varying situations as may fit the particular needs of a grower.

Similarly, the uniquely configured growing media discussed herein may be used apart from the tray 11. One such use would be in a conventional open tray which does not have the mating cavities 14 or, it may be used directly on a grower bench or work table. It also can find use in the bench unit set forth in copending application U.S. Ser. No. , commonly owned by the Assignee of record herein. In any of these and other instances, the unique shape allows for visual inspection of developing roots and also provides improved access of heat, water and oxygen to the roots.

Based upon the foregoing explanation, the present invention should now be fully understood. It will be appreciated that the grower unit 10 can be fabricated from a variety of plastics and similarly, selection of growing media need not be limited to rigid products such as the foam discussed herein.

Any such variations including but not limited to the foregoing can be determined without departing from the spirit of the invention herein disclosed and described. Moreover, the scope of the invention shall include all modifications and variations that fall within the scope of the attached claims.

## Claims

1. A tray comprising a first support surface; a plurality of cavities carried by said support surface in at least one row, each said cavity having first and second pairs of side walls, a mouth and a bottom; and dam means formed in said support surface separating adjacent cavities in said rows.

2. A tray as claimed in claim 1, wherein said first pair of opposed side walls are tapered inwardly and downwardly and said bottom is narrower than said mouth.

3. A tray as claimed in claim 1 or claim 2, wherein said mouth is open at said support surface and said bottom is at least partially open.

4. A tray as claimed in any of the preceding claims, wherein said dam means are a continuation of said first pair of opposed side walls and join together in a ridge standing above said first support surface.

5. A tray as claimed in any of the preceding claims, wherein said plurality of cavities form at least two rows and said tray further includes a divider strip between said rows.

6. A tray as claimed in claim 5, wherein said divider strip is coplanar with said first support surface and is lower than said dam means.

7. A grower unit for the propagation of plants comprising a tray means as claimed in any of the preceding claims and artificial growing media adapted to fit said plurality of cavities and engageable with said dam means.

8. A grower unit as claimed in claim 7, wherein said growing media comprises strips of rigid foam material.

9. A grower unit as claimed in claim 8, wherein said rigid foam material comprises an open celled phenol formaldehyde material that is quickly wettable with water and is highly retentive of said water.

10. A grower unit as claimed in any of claims 7 to 9, wherein said growing media provides a continuous, undulating lower surface forming a plurality of tapered sections, each said section being adapted to fit within one said cavity.

11. A grower unit as claimed in claim 10, wherein said growing media further provides bridge means connecting said tapered section together and engageable with said dam means.

12. A grower unit as claimed in claim 11, wherein said bridge means are fracturable over said dam means to provide a plurality of separate sections.

13. A growing media strip comprising an upper surface; a pair of opposed side walls extending downwardly from said upper surface; a continuous, undulating lower surface passing between said side walls and forming a plurality of tapered sections; and bridge means connecting said sections together.

14. A growing media strip as claimed in claim 13, wherein said growing media comprises strips of rigid foam material.

15. A growing media strip as claimed in claim 14, wherein said rigid foam material comprises an open celled phenol formaldehyde material that is quickly wettable with water and is highly retentive of said water.

FIG. 1

FIG. 2

FIG. 3

FIG. 4

FIG. 5

# FIG. 6

# FIG. 7

# FIG. 8